# EUROPEAN PATENT SPECIFICATION

(11) **EP 1 167 309 B1**
(45) Date of publication and mention of the grant of the patent: **18.10.2006**
(21) Application number: 01114835.0
(22) Date of filing: 28.06.2001
(51) Int. Cl.: C03C 3/06, C03B 19/10, C01B 33/18, C30B 15/10

(54) **Synthetic quartz powder, its production process, and synthetic quartz crucible**
Synthetisches Quarzpulver, Verfahren zur Herstellung und synthetischer Quarztiegel
Poudre de quartz synthétique, procédé pour sa production et creuset en quartz synthétique

(30) Priority: 28.06.2000 JP 2000195167
(43) Date of publication of application: 02.01.2002
(73) Proprietor: Japan Super Quartz Corporation, Akita-shi, Akita-ken 010-0065 (JP)
(72) Inventor: Fukui, Masanori, Akita-shi, Akita 010-0065 (JP); Sato, Takahiro, Akita-shi, Akita 010-0065 (JP)
(74) Representative: HOFFMANN EITLE

(56) References cited:
- EP-A- 0 486 004
- EP-A- 0 801 026
- EP-A- 0 965 663
- US-A- 5 302 556
- DATABASE WPI Section Ch, Week 199108 Derwent Publications Ltd., London, GB; Class L01, AN 1991-054667 XP002179304 & JP 03 005329 A (SHINETSU CHEM IND CO LTD), 11 January 1991 (1991-01-11)

## Description

### [Technical field of the invention]

This invention relates to a synthetic quartz powder having few residual gases, especially few carbon contents and hydroxyl group contents, its production process, and a quartz crucible having few bubble contents, which is made with said synthetic quartz powder.

### [Background of the invention]

It is known that the sol-gel method, in which the synthetic quartz powder is made by drying and baking a gel obtained by hydrolyzing a metal alkoxide. As an example of said process, it is known that the process, in which an ethyl-silicate is hydrolyzed to be gelled (nSi(OH)₄), said gelled ethyl-silicate is pulverized and dried to obtain a silica gel powder, and said silica-gel powder is baked at predetermined temperature (about 1050°C) to be dehydrated to obtain an amorphous silica powder (nSiO₂).

It is also known that the synthetic quartz powder made by said process has high purity having few metal impurities than a natural quartz powder, but carbon and the hydroxyl group causing said alkoxy group are remained. From this reason, when the quartz glass crucible is made by using said synthetic quartz powder obtained by the sol-gel method as a raw material, there is a case that said carbon may cause a bubble generation.

Therefore, in the process for producing the synthetic quartz powder by the sol-gel method, a trial is done, in which residual carbons are combusted to be removed, before the synthetic quartz powder is made by baking a dry gel powder to be vitrified. That is, it is well known that the process, in which the amount of the residual carbon is reduced by heat-treating the dry gel powder where said carbon is changed to carbon gases by combusting at a temperature of less than 600°C , at which pores of the dry gel powder are not closed, and in oxygen atmosphere (generally in air), (Japanese Patent Raid Open No. Hei09-86916 and Japanese Patent Application No. Hei10-287416, etc.). In all of said processes, the residual carbon in the dry gel powder is combusted to be removed, before said pores of dry gel powder are closed. That is, an amorphous synthetic quartz powder is made by baking said dry gel powder at about 1000°C to 1300°C to be vitrified (closing pores), after decarbonizing at less than 600°C .

Moreover, it is also known that the process, in which the amorphous synthetic quartz powder is made by pulverizing a quartz glass ingot, which is made by baking to be fused the silica powder made by the sol-gel method after heat-treating (Japanese Patent Publication of Examined Application No. Hei05-63416). Said process removes an OH group by fusing to be vitrified the silica powder made by the sol-gel method, which is heated at 1500°C after combusting organic materials at about 500°C in air. Moreover, said process is common in the former process, wherein the residual carbon is combusted to be removed, by heating in air at a temperature of less than 600°C , at which the pores of dry gel powder are not closed. In addition, in said process, the heating is done in a low pressure atmosphere at time of making the glass ingot at about 1500°C for evacuation removal of the air contained in the silica powder, and the removal of the residual carbon is mainly done in the oxidization combusting process before vitrifying at less than 600°C . In the high temperature sintering at about 1500°C , it is difficult to remove the carbon since the silica powder is sintered.

Furthermore, it is also known that the process in which the predetermined high-density synthetic quartz powder is made by baking in two stages under a dry atmosphere or a reduced pressure, when the synthetic quartz powder is made by baking dry gel powder. Although said process shows the baking under a reduced pressure as one mode of the baking process, since said process has the objective of increasing the effect of dehydration and the vacuum degree is low, therefore, said process is almost ineffective about the decarbonization. That is, since this baking process heats with stirring while avoiding the heating in the reduced pressure container, it is difficult to keep the high vacuum and, the limit of the reduced pressure is about 0.5 atmosphere in a real operation. Therefore, the residual carbon cannot be removed at such a reduced pressure.

About the synthetic silica powder made by the sol-gel method in this way, although it is conventionally known that the process, in which the residual carbon contained in silica powder is combusted in air to be removed, the limit of concentration of the residual carbon in the silica powder by said process is about 5 to 100ppm, and it is difficult to reduce the residual carbon more remarkably than this value.

### [Problems to be solved]

This invention solves the above-mentioned problems, and provides the treatment process, which reduces the residual gases of the synthetic quartz powder made by wet process, especially, the amount of the residual carbon and the hydroxyl group content. Moreover, this invention provides the synthetic quartz powder made by said treatment process, and the quartz glass crucible having few bubbles contents, made by said synthetic quartz powder.

### [Means to solve problems]

That is, this invention relates to the process for producing of the synthetic quartz powder, comprising the following compositions.
(1) A process for producing of a synthetic quartz powder, wherein the silica gel powder or a dried silica powder made by wet process is baked starting under a low pressure atmosphere of less than 100 Pa and at a temperature being more than 600°C and less than 1400°C, wherein the baking is finished when the vacuum degree reached is less than 5 Pa.
(2) The process for producing a synthetic quartz powder according to above-mentioned (1), wherein the vacuum degree is less than 50 Pa.
(3) A process for producing a synthetic quartz powder according to (1) or (2), wherein in a first step preceding the low pressure baking step a silica gel powder made by wet process is baked to obtain a dried silica powder under a dry air or an oxidizing atmosphere and at a temperature being more than 800°C and less than 1400°C.
(4) The process for producing a synthetic quartz powder according to above-mentioned (3), wherein the baking time is 5 to 70 hours.

Moreover, this invention relates to a following synthetic quartz powder and quartz glass crucible.
(5) A synthetic quartz powder made by any processes according to above-mentioned (1) to (4), wherein a carbon content of said powder is less than 2ppm and a hydroxyl group content is less than 50ppm.
(6) A quartz glass crucible made by a synthetic quartz powder, wherein a part of an inside surface of said crucible is at least made by the synthetic quartz powder according to above-mentioned (5) as a raw material.
(7) A quartz glass crucible made by a synthetic quartz powder, wherein a part of the inside surface of said crucible is at least made by the synthetic quartz powder according to (5), and a bubble content in a transparent glass layer, where the thickness of said layer is in 0.5 mm from the inside surface of said crucible, is less than 0.1 %.

The process for producing of this invention reduces residual gases in the powder, especially the residual carbon, by baking the silica gel powder made by wet process, or the dried silica powder made by baking said silica gel powder, while keeping the state of the powder under the following conditions. The reduced pressure is lower than a medium vacuum, that is, said reduced pressure is less than 100Pa, and is preferably to be less than 50Pa. The temperature is from more than 600°C to less than 1400°C. Furthermore, this vaccum baking step is finished when the vacuum degree reached is less than 5 Pa. In addition, according to the process of this invention, an amorphous synthetic quartz powder having the residual carbon being less than 2ppm, can be produced.

In addition, the process for producing of this invention also includes the process that bakes to decarbonize in the above-mentioned vacuum, after baking to remove the hydroxyl group in an air atmosphere while keeping the powder state. By baking in two stages in an air atmosphere and a low pressure atmosphere at the specific temperature range, the amorphous synthetic quartz powder, which is reduced the residual hydroxyl group remarkably with the residual carbon, is made. Specifically, in the above-mentioned synthetic quartz powder, the residual carbon is less than 2ppm, and the residual hydroxyl group is less than 50ppm.

### [The example of the invention]

Hereafter, the invention is explained in detail according to the examples.

The process for producing the synthetic quartz powder of this invention is that the silica gel powder or the dried silica powder made by wet process is baked in the low pressure atmosphere of less than 100 Pa and at a temperature being from more than 600°C and less than 1400°C, and the baking is finished when the vaccum degree reached is less than 5 Pa. Moreover, the synthetic quartz powder of this process is made by baking the silica gel powder made by wet process in an air atmosphere and at a temperature being from more than removing the hydroxyl group to less than powder sintering, and said dried silica powder is baked in the low pressure atmosphere of less than 100 Pa and from more than 600°C and less than 1400°C, and the baking is finished when the vaccum degree reached is less than 5 Pa.

In this invention, the silica gel powder made by wet process or dried silica powder is that the silica gel powder is made by the sol-gel method by hydrolyzing alkoxy-silane etc., and the dried silica powder is made from said silica gel powder. The dry silica gel powder is made by pulverizing and drying the gel, which is made by hydrolyzing alkoxy-silane etc. Moreover, by sintering at the predetermined temperature and drying said silica gel powder, the amorphous dried silica powder can be made.

In addition, a humid gel (a wet gel, i.e., an amorphous silicate containing water) is made by hydrolyzing and gelling the alkoxy-silane, such as ethyl-silcate, etc. Said humid gel contains alcohols and water so much in the pores. The dry gel is made by heating said humid gel at 50°C to 200°C and drying alcohols and water in the pores. Conventionally, said dry silica gel powder has 1000ppm to 10000ppm of the residual carbon, and the moisture containing 10 to 40 wt% of H₂O.

The conventional process for producing the amorphous synthetic quartz powder is that the residual carbon in the pore is combusted by heating said dry silica gel powder at the predetermined temperature (about less than 600°C) at which the pore is not closed in air, and after reducing the carbon content to 50-2000ppm, the heating to be baked of said silica gel powder is done at 1000 to 1300°C and said powder is vitrified and closes the pores.

On the other hand, the process for producing of this invention does not reduce the residual carbon only by combusting the carbon at less than 600°C , but by baking to decarbonize in the reduced pressure less than the medium vacuum, i.e., less than 100Pa, preferably less than 50Pa, while keeping the powder state. It is also good that this decarbonization by vacuum baking is done, after the dried silica powder is made by baking the silica gel powder to reduce the hydroxyl group in air, while keeping the powder state. Moreover, it is also good that preliminary baking is done before the air baking, if necessary. In addition, the process for producing of this invention includes the case of the vacuum baking being done after preliminary baking and air baking. Hereafter, the preliminary baking, the air baking, and the vacuum baking are explained in order of the processing.

### [Preliminary baking]

The dry gel made by hydrolyzing alkoxy-silane contains 1000ppm - 10000ppm of the residual carbon, and the moisture content is 10 - 40wt% of H₂O. By baking said dry silica gel at less than 600°C in the dry atmosphere having oxygen, the residual carbon is combusted and the residual moisture is evaporated. About heating method, the dry silica gel is put into the electric furnace to heat where said furnace is heated beforehand at 500 to 600°C. The heating time is 2 to 50 hours suitably. Moreover, since the combustion of carbon accelerates as the oxygen concentration becomes high, more than 30vol% of oxygen concentration is suitable, and dry atmosphere is preferably due to accelerate the evaporation of the moisture. By said preliminary baking, the H₂O content can be reduced to 1 to 10wt%, and the carbon concentration can be reduced to 50 to 2000ppm. However, since it is difficult to reduce the H₂O content and the carbon concentration less than above-mentioned value under the practical conditions, the following air baking and vacuum baking are done.

### [Air baking]

By baking the silica gel powder in air, the content of the hydroxyl group and the residual carbon is reduced, and the amorphous dried silica powder is made. Since it is better for productivity to do the vacuum baking of the dried silica powder rather than doing vacuum baking of the silica gel powder directly, it is preferably to do the air baking. The baking of the silica gel powder in air is done at the temperature being from more than removing hydroxyl group to less than powder sintering, while keeping the powder state. Here, the removing hydroxyl group temperature is the temperature that the hydroxyl group contained in the silica gel powder removes away, specifically, is more than 800°C in general, and preferably more than 1000°C. Moreover, the powder sintering temperature is the temperature that keeps the powder state before said powder is fused to become a block. In addition, the temperature causing the partial sintering where the baked powder can be pulverized, is included in the range of the temperature being less than the powder sintering. Specifically, the temperature being less than the powder sintering is less than 1400°C in general, and preferably less than 1300°C. Although the baking time depends on the temperature, it is enough to be 5 to 70 hours.

About the temperature-rising speed in the air baking, either of the case doing the air baking from the preliminary baking continuously, or the case doing the preliminary baking and air baking independently, is preferably to be 1 to 10 °C/minute. When the temperature-rising speed is too high than the above-mentioned value, since the carbon and the hydroxyl group included in the powder are gasified rapidly to splash the powder, it is not preferably.

About the baking atmosphere of the air baking, either the air atmosphere or the oxidizing atmosphere is good. In the case of baking in the oxidization atmosphere, since the combustion of carbon is accelerated as the oxygen concentration becomes high, such condition is preferably. Specifically, more than 30vol% of the oxygen concentration is suitable. Moreover, the dry atmosphere is preferably in order to accelerate the evaporation of moisture. Specifically, the low humidity atmosphere is suitable, in which the dew point is less than -30°C and preferably less than -50°C .

By the above-mentioned air baking, the hydroxyl group contained in silica gel powder is removed, and the hydroxyl group concentration decreases to 50 to 100ppm. Moreover, the contained carbon is also combusted simultaneously and the carbon concentration decreases to 5 to 20ppm. However, in general, it is difficult to reduce the residual carbon rather than above-mentioned level by the air baking. Therefore, in the process for producing of this invention, the residual carbon can be reduced remarkably by the vacuum baking after the air baking. In addition, the hydroxyl group concentration is also reduced by said vacuum baking. About the vacuum baking, it is good either doing continuously from the air baking, or doing independently with the air baking.

### [Vacuum baking]

The decarbonizing baking in the low pressure atmosphere is done in less than 100Pa and at the temperature being from more from more than 600°C and less than 1400°C, and the baking is finished when the vaccum degree reached is less than 5 Pa. The decarbonizing temperature is the temperature that the carbon is gasified and removed away from the silica gel powder or the dried silica powder, and although is changed with vacuum degree, is more than 600°C in general, and preferably more than 800°C. Moreover, as above-mentioned, the powder sintering temperature is less than 1400°C in general, and preferably less than 1300°C. When the baking temperature is less than 600°C, the residual carbon cannot be removed enough. On the other hand, when the baking temperature is more than 1400°C, the raw material powder (the silica gel powder or the dried silica powder) is sintered together to become a block and the specific surface area becomes small, so that the decarbonization can not be proceeded. When the raw material powder is baked while keeping the powder state, it is suitable to be less than 1400°C. In addition, when the baking temperature becomes more than 1200°C, the sintering of the raw material powder is started partially, so that said sintered powder must be crashed after the process of the vacuum baking. Therefore, said process becomes high cost and is not preferably. From this reason, the baking temperature is preferably to be 800 to 1200°C. Moreover, the baking time is suitable to be more than 1 hour, and preferably 2 to 24 hours. When the baking time is less than 1 hour, the decarbonization is insufficient.

The baking is done in the higher vacuum degree than medium vacuum (in the vacuum of low pressure). Conventionally, the vacuum degree is classified to three classes with the pressure, i.e., low vacuum (an atmospheric pressure to 100Pa), medium vacuum (100Pa to 0.1Pa), high vacuum (0,1Pa to 10⁻⁵Pa), and ultra high vacuum (less than 10⁻⁵Pa). However, the baking of this invention is done in the vacuum higher than medium vacuum, i.e., in the medium vacuum less than 100Pa, and the high vacuum less than 0.1Pa. There is not enough decarbonizing effect in the low vacuum more than 100Pa. The vacuum degree is preferably to be less than 50Pa. The residual carbon can be reduced in a short time as the vacuum degree becomes high. An evacuating method is not limited.

By baking the raw material powder in the vacuum higher than the medium vacuum less than 100Pa, the carbon groups intermixed or included in the raw material powder, or the carbon groups adsorbed on the surface of the raw material powder, are decomposed to be gasified and removed. Conventionally, the carbon contained in the silica gel powder or the dried silica powder exists with the following various forms. (a) Carbon taken in inside of the silica powder, (b) Carbon adsorbed on the surface of the powder, (c) Carbon intermixed between powders. By the preliminary baking and the air baking, although the carbons of above mentioned (b) and (c) can be removed, the carbon of above mentioned (a) cannot be removed enough. For this reason, it is difficult to reduce the residual carbon less than 5ppm by the air baking. On the other hand, by the vacuum baking, the carbon of above mentioned (a), (b), and (c) can be removed, especially, the carbon taken in inside of quartz powder can be removed. Therefore, the residual carbon of quartz powder can be reduced to less than 2ppm. Moreover, since residual hydroxyl group is also gasified and removed simultaneously, the amount of hydroxyl group content can be less than 50ppm.

Although the reducing pressure and heating at the time of the baking may do whichever first, when the heating is done simultaneously with the reducing pressure or after the reducing pressure started, the vacuum degree is high at the time of reaching to the predetermined temperature and the decarbonization can be done more in a short time, so that it is economical. Specifically, for example, the inside of furnace is evacuated to 10Pa, and the heating is started to raise the temperature for 8 hours to 1100°C from room temperature (about 25°C). After keeping at the fixed temperature of 1100°C for 10 hours, cooling is done. In this time, when the temperature-rising speed is too high, the carbon and the hydroxyl group contained in the powder gasify rapidly to splash the powder, so that the temperature-rising speed is preferably to be 1 to 10°C/minute, as considering the balance with the processing time.

The baking time of the vacuum baking can be judged with the reached vacuum degree. That is, for a while from the baking start, the pressure inside of the furnace is raised by the expansion of residual air in the heating furnace and the evaporation of the residual carbon and the hydroxyl groups in the raw material powder. However, since these gases are removed as time passes, after passing over the peak of the pressure raise, the pressure inside of the furnace decreases for a short time comparatively, and then, decreases gradually. Specifically, for example, when the baking is done by heating at 1000°C to 1100°C in the reduced pressure of 50Pa, although the pressure raises first, becomes about vacuum degree of 10Pa in a short time (about 2 hours), and then, decreases gradually to reach the vacuum degree of less than 5Pa after about 3 to 7 hours. It is good that the baking is ended after reaching the objective vacuum degree.

Conventionally, when the baking is ended after reaching the vacuum degree of less than 5Pa, the amount of the residual carbon of the synthetic quartz powder can be reduced to less than 2ppm and the hydroxyl group concentration can be reduced to less than 50ppm. In addition, when the baking is ended after reaching the vacuum degree of less than 1.5Pa, the amount of the residual carbon of the synthetic quartz powder can be reduced to less than 0.5ppm and the hydroxyl group concentration can be reduced to less than 30ppm. Therefore, according to the present invention, the baking is ended after reaching the vacuum degree of less than 5Pa in general, and preferably less than 1.5Pa.

Although the vacuum baking can be done directly to the dry silica gel powder which does not through the air baking, but the dry silica gel has low mass density, so that there are few amounts filling the vacuum heating furnace, and its productivity is low. Therefore, when the dried silica powder having high density made by the air baking is used rather than using the dry silica gel, the amount of filling the vacuum heating furnace increases, and the productivity also is improved. Moreover, when the air baking is done, the removal efficiency of the hydroxyl group is good.

As above-mentioned, the process for producing of this invention is the process, which gasifies and removes the residual carbon contained in raw material powder by baking said powder in the low pressure atmosphere. Therefore, this process is not the conventional process, in which the residual carbon is removed by combusting at the temperature of less than 600°C in the oxygen atmosphere. That is, the process for producing of this invention gasifies and removes the residual carbon from the raw material powder of the dry silica gel powder or the amorphous dried silica powder, by heating said powder in the low pressure atmosphere of less than 100Pa, preferably less than 50Pa at the temperature of >600 to <1400°C,while keeping the powder state. Therefore, the process for producing of this invention is different from the process that combusts the residual carbon in oxygen atmosphere. In addition, the process of this invention bakes the raw material powder while keeping the powder state, because the residual carbon is difficult to be removed when the raw material powder is sintered. Moreover, the most of the residual hydroxyl group is gasified to be removed with the residual carbon by this vacuum baking.

By using the process for producing of this invention, the amorphous synthetic quartz powder, where the carbon content is less than 2ppm and hydroxyl group content is less than 50ppm, can be obtained. When synthetic quartz powder having many residual carbons is used as the raw material of the quartz crucible, the residual carbon is decomposed and gasified to make bubbles under the high temperature at the time of the heating fusion of the quartz powder, so that the product has many bubbles. When said bubbles exist in the silica glass crucible used for raising a silicon single crystal, such bubbles expand under high temperature at the time of using, and at last burst to make concave parts, so that the growth of the single crystal is prevented.

On the other hand, about the synthetic quartz powder of this invention, the carbon content is less than 2ppm and the amount of hydroxyl groups is less than 50ppm, that is quite few than the conventional synthetic quartz powder, so that the quartz glass crucible having few bubbles can be made by using said synthetic quartz powder for the raw material. Specifically, for example, by forming an outside surface layer of the crucible by the natural quartz powder, and using the synthetic quartz powder of this invention as the raw material powder to make an inside surface layer of the crucible, the quartz glass crucible can be made, in which the carbon content of the inside surface layer is less than 2ppm. Moreover, by the above-mentioned method, the quartz glass crucible can be made, in which the bubble content of the transparent glass layer where the layer thickness from the inside surface is less than 0.5mm, is less than 0.1%. In addition, the bubble content of the inside surface layer of the silica glass crucible using the conventional synthetic quartz powder as the raw material is about 0.2 to 0.3%, and this invention can reduce said bubble content to more than about 50%.

Moreover, when the quartz glass crucible is made by using the synthetic quartz powder of this invention, the average particle diameter of said synthetic quartz powder is set to the suitable diameter for making of the quartz glass crucible beforehand. For example, it is suitable that, about the dry silica gel powder, the diameter is 50 to 1000µm and preferably 100 to 600µm, and about the amorphous synthetic quartz powder, the diameter is 75 to 700µm and preferably 100 to 500µm. As for the particle having the above-mentioned particle diameter, the decarbonization reaction easily accelerates at the time of heat-treating in the vacuum of more than the medium vacuum.

Conventionally, the quartz glass crucible made by the synthetic quartz powder as the raw material, has more bubbles than the crucible made by the natural quartz powder. Because many gas components (OH group and carbon) are contained in the synthetic quartz powder compared with the natural quartz powder. Although said gas components become the sources of generating bubbles, there are expanding bubbles and disappearing bubbles without expanding, at the time of using the crucible. The components of said expanding bubbles are mainly CO and CO₂, and the main components of the bubbles, which do not expand so much, are moisture (H₂O). Therefore, the amount of carbon contained in the raw material powder of the quartz glass crucible has much influence on the quality of the crucible.

According to the process of this invention, since the amount of the residual carbon can be remarkably reduced about the dry silica gel powder and the amorphous dried silica powder as above-mentioned, the quartz glass crucible having quite few bubbles can be made by using said powders as the raw material. Moreover, about not only the quartz glass crucible, but also other silica glass products made by the synthetic quartz powder as the raw material, the product having few bubbles and carbon contents can be made.

### [Example 1]

This invention is explained concretely with the example.

### Example 1 and Comparison example 1

The vacuum baking of the amorphous synthetic quartz powder obtained by hydrolyzing alkoxy-silane was done under the conditions shown in Table 1. In addition, since the pressure of the inside of the vacuum furnace is raised with the gases generated by baking, the baking was done while evacuating suitably the inside to keep the predetermined vacuum degree. The amount of the residual carbon by this vacuum baking was shown in Table 1. Moreover, the quartz glass crucible was made by using said baked synthetic quartz powder as the part of the raw material. That is, by the rotational molding method, the quartz glass crucible (61 cm (24 inches) diameter) was made, in which the natural quartz powder was used for the outside part, and the synthetic quartz powder shown in Table 1 was used for the inside part, and in addition, the layer thickness of 2 to 3mm from the inside surface (the inside surface layer of the crucible) was made with the synthetic quartz layer, and the outside of said layer (the outside surface layer of the crucible) was made with the natural quartz layer (the layer thickness of 10-12mm). About this quartz glass crucible, the bubble content and carbon concentration at a part of 0.5mm from the inside surface were measured. Moreover, the silicon single crystal was raised by using these crucibles. This result (the average value of five) was summarized in Table 1.

As shown in Table 1, the synthetic quartz powder made by baking process of this invention (Example: No.A1 to No.A4) has very few amounts of the residual carbon. Therefore, there were also few bubbles content of quartz glass crucible, and the excellent rate of single-crystalizing is realized. In addition, as for these sample No.A1 to No.A4, when the synthetic quartz powder was put into the glass crucible to be covered with a cap, and said crucible was put in the vacuum heating chamber to be done the baking process, then the carbon has adhered to the reverse side of the cap after baking, so that it could be also checked visually that the carbon, which is equivalent to the amount of adhesion at least, had removed away from the quartz powder of the raw material (decarbonization).

On the other hand, in the comparison example (No.B1 to No.B3) which was out of the conditions of the baking process of this invention, the carbon was not adhered to the reverse side of the cap, and many amounts of the residual carbon were measured by analyzing the quartz powder after baking processing. For this reason, the bubble content of the quartz glass crucible made with this quartz powder was 2 to 5 times of the crucible of this invention, and the rate of single-crystalizing was as low as about 50 % of this inventions. Moreover, as for the comparison example No.B4, the raw material powder sintered to a block, so that the quartz crucible could not be made.

### Example 2 and Comparison example 2

By baking 100kg of silica gel powder made by hydrolyzing alkoxy-silane (the amount of the residual carbon is 93ppm, H₂O content is 40wt%) under the conditions shown in Table 2, the amorphous synthetic quartz powder was made. In addition, the vacuum baking of this example is different from the Example 1, which was baked while keeping the predetermined vacuum degree. The vacuum baking of this example is baked under the vacuum of less than 50Pa, is continued while always evacuating the gas generated by baking, and is ended after reaching the objective vacuum degree. The result of this baking process was shown in Table 2 with the reached vacuum degree. Furthermore, the quartz glass crucible was made like the Example 1 by using said synthetic quartz powder done baking process as a part of the raw material. About this quartz crucible, the bubble content of the part of 0.5 mm from the inside surface and carbon concentration were shown in Table 2. Moreover, the bubble content after using said crucible for raising the silicon single crystal was shown in Table 2.

For each synthetic quartz powder (No.A21-No.A27) of this invention after the vacuum baking, the amount of residual carbon is less than 2ppm, and the amount of residual hydroxyl group is less than 50ppm, so that it is remarkably small. Moreover, there are also very few bubble contents of the made quartz crucible. On the other hand, since the comparison sample No.B21 had done at too high temperature of the air baking, the most parts of silica gel powder sintered, the objective synthetic quartz powder could not be obtained. Moreover, since the comparison sample No.B22 had done at too high temperature of the vacuum baking, the most parts of powder sintered. In addition, since the comparison sample No.B23 had done at too low temperature of the vacuum baking, the decarbonization and drying in the vacuum baking hardly proceeded, the amount of the residual carbon and the residual hydroxyl group hardly changed at the time of the air baking. Furthermore, since the comparison sample No.B24 had done at low temperature of the air baking, the temperature-rising speed was high at the time of the vacuum baking continuously, so that gases generated rapidly to splash the raw material powder. Moreover, since the comparison samples No.B25 and No.B26, were done under the low reached vacuum degree not less than SPa, there were very much amount of residual carbon and residual hydroxyl group after baking. For this reason, the bubble content of made quartz crucible is high, and about the comparison sample No.B26, a lot of bubbles were generated, so that said sample was not suitable for practical use.

### [Effectiveness of the invention]

This invention is the process that the amount of residual carbon is reduced by baking the synthetic quartz powder made by wet process in the low pressure atmosphere. In addition, according to the invention the residual hydroxyl group was reduced with reducing the residual carbon by baking in the low pressure atmosphere after the air baking. Moreover, the quartz glass crucible using the synthetic quartz powder of this invention process as the raw material powder, has low bubble content, and can realize the excellent rate of the single-crystallizing.

**Table 1**

| | | Example 1 | | | | Comparison Example 1 | | | |
|---|---|---|---|---|---|---|---|---|---|
| | | A1 | A2 | A3 | A4 | B1 | B2 | B3 | B4 |
| Residual Carbon content | | | | | | | | | |
| | (Before Treatment : ppm) | 15.7 | 15.7 | 15.7 | 15.7 | 15.7 | 15.7 | 15.7 | 15.7 |
| Vacuum Baking | | | | | | | | | |
| | Maximum Temperature(°C) | 1150 | 1000 | 750 | 650 | Non Treatment | 500 | 1150 | 1500 |
| | Heating Time (hr) | 4 | 10 | 18 | 24 | - | 24 | 4 | 2 |
| | Vacuum Degree (Pa) | 10 | 10 | 10 | 70 | - | 70 | 200 | 100 |
| | Carbon Content (ppm) | 0.4 | 1.00 | 1.5 | 1.9 | 15.7 | 10.1 | 8.7 | |
| Quartz Crucible | | | | | | | | | Raw Material Powder was Sintered like a Block. |
| | Carbon Content (ppm) | 0.4 | 1.00 | 1.5 | 1.9 | 15.7 | 10.1 | 8.7 | |
| | Rate of Bubble Content (Before Use: %) | 0.03 | 0.06 | 0.08 | 0.09 | 0.27 | 0.20 | 0.21 | |
| | Rate of Bubble Content (After Use: %) | 1.2 | 3.4 | 4.4 | 5.7 | 19.3 | 14.3 | 13.4 | |
| Rate of Single-Crystalizing (%) | | 77 | 74 | 70 | 68 | 33 | 45 | 46 | |
| Judgement | | ⓞ | O | O | ○ | × | × | × | × |

| | | | | | | | | | |
|---|---|---|---|---|---|---|---|---|---|
| Notes The column of Quartz Crucible is the value of the inside surface layer formed with the synthetic quartz. Judgement is that ⓞ is Best, ○ is Good, and × is No Good. Heating Time is the heating time at the maximum temterature Rate of Bubble Content is the value of the layer having 0.5mm thickness from the inside surface of the crucible. Rate of Single-Crystalizing is weight of singlecrystal / weight of raw material poly-crystal (%) Unit of Rate of Bubble content and Rate of Single-crystalizing is %. | | | | | | | | | |

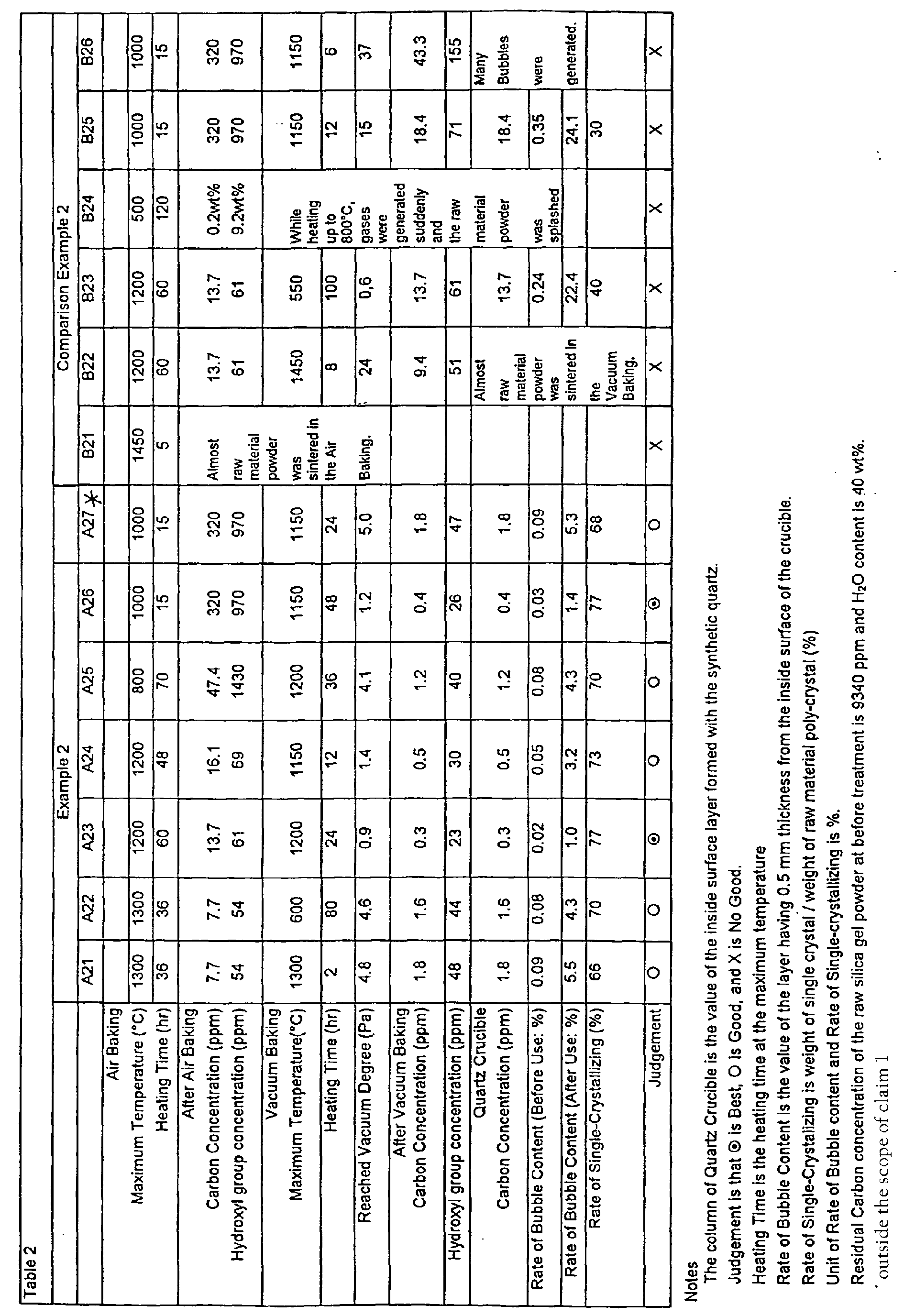

## Claims

1. A process for producing a synthetic quartz powder, wherein the silica gel powder or a dried silica powder made by wet process is baked starting under a low pressure atmosphere of less than 100 Pa and at a temperature being more than 600°C and less than 1400°C, wherein the baking is finished when the vacuum degree reached is less than 5 Pa.

2. The process for producing a synthetic quartz powder according to Claim 1, wherein the starting vacuum degree of the low pressure atmosphere is less than 50 Pa.

3. The process for producing a synthetic quartz powder according to Claims 1 or 2, wherein in a first step preceding the low pressure baking step a silica gel powder made by wet process is baked to obtain a dried silica powder under a dry air or an oxidizing atmosphere and at a temperature being more than 800°C and less than 1400°C.

4. The process for producing a synthetic quartz powder according to claim 3, wherein the baking time of the first step is 5 to 70 hours.

5. A synthetic quartz powder obtainable by a process according to any of the Claims 1 to 4, wherein its carbon content is less than 2 ppm and hydroxyl group content is less than 50 ppm.

6. A quartz glass crucible made by a synthetic quartz powder, wherein a part of the inside surface of said crucible is at least made by the synthetic quartz powder according to Claim 5 as a raw material.

7. A quartz glass crucible made by a synthetic quartz powder, wherein a part of the inside surface of said crucible is at least made by the synthetic quartz powder according to Claim 5, and a bubble content in a transparent glass layer, where the thickness of said layer is in 0.5 mm from the inside surface of said crucible, is less than 0.1 %.

## Patentansprüche

1. Verfahren zur Herstellung eines synthetischen Quarzpulvers, worin das Silicagelpulver oder ein getrocknetes Silicapulver, hergestellt durch ein Naßverfahren, gebrannt wird, beginnend bei einer Niederdruckatmosphäre von weniger als 100 Pa und einer Temperatur von mehr als 600°C und weniger als 1.400°C, wobei das Brennen beendet wird, wenn ein Vakuumgrad von weniger als 5 Pa erreicht ist.

2. Verfahren zur Herstellung eines synthetischen Quarzpulvers gemäß Anspruch 1, wobei der Ausgangsvakuumgrad der Niederdruckatmosphäre weniger als 50 Pa ist.

3. Verfahren zur Herstellung eines synthetischen Quarzpulvers gemäß Anspruch 1 oder 2, wobei in einem ersten Schritt, der dem Niederdruck-Brennschritt vorausgeht, ein durch ein Naßverfahren hergestelltes Silicagelpulver zum Erhalt eines getrockeneten Silicapulvers in trockener Luft oder einer oxidierenden Atmosphäre und bei einer Temperatur von mehr als 800°C und weniger als 1.400°C gebrannt wird.

4. Verfahren zur Herstellung eines synthetischen Quarzpulvers gemäß Anspruch 3, wobei die Brennzeit des ersten Schritts 5 bis 70 Stunden ist.

5. Synthetisches Quarzpulver, das durch ein Verfahren gemäß einem der Ansprüche 1 bis 4 erhältlich ist, wobei sein Kohlenstoffgehalt weniger als 2 ppm und der Hydroxylgruppengehalt weniger als 50 ppm ist.

6. Quarzglastiegel, der aus einem synthetischen Quarzpulver hergestellt ist, worin ein Teil der inneren Oberfläche des Tiegels zumindest aus dem synthetischen Quarzpulver gemäß Anspruch 5 als Rohmaterial hergestellt ist.

7. Quarzglastiegel, der aus einem synthetischen Quarzpulver hergestellt ist, worin ein Teil der inneren Oberfläche des Tiegels zumindest aus dem synthetischen Quarzpulver gemäß Anspruch 5 hergestellt ist und der Blasengehalt in einer transparenten Glasschicht, wenn die Dicke der Schicht 0,5 mm ab der inneren Oberfläche des Tiegels ist, weniger als 0,1 % ist.

## Revendications

1. Procédé de production d'une poudre de quartz synthétique, dans lequel une poudre de gel de silice ou une poudre de silice séchée fabriquée par un procédé par voie humide est cuite au départ dans une atmosphère de faible pression inférieure à 100 Pa et à une température supérieure à 600°C et inférieure à 1400°C, dans lequel la cuisson est achevée lorsque le degré de vide atteint moins de 5 Pa.

2. Procédé de production d'une poudre de quartz synthétique selon la revendication 1, dans lequel le degré de vide de départ de l'atmosphère de faible pression est inférieur à 50 Pa.

3. Procédé de production d'une poudre de quartz synthétique selon la revendication 1 ou 2, dans lequel dans une première étape précédant l'étape de cuisson à basse pression une poudre de gel de silice fabriquée par un procédé par voie humide est cuite pour donner une poudre de silice séchée dans une atmosphère d'air sec ou oxydante et à une température supérieure à 800°C et inférieure à 1400°C.

4. Procédé de production d'une poudre de quartz synthétique selon la revendication 3, dans lequel la durée de cuisson de la première étape est de 5 à 70 heures.

5. Poudre de quartz synthétique susceptible d'être obtenue par un procédé selon l'une quelconque des revendications 1 à 4, dans laquelle sa teneur en carbone est inférieure à 2 ppm et sa teneur en groupes hydroxyle est inférieure à 50 ppm.

6. Creuset en verre de quartz fabriqué à partir d'une poudre de quartz synthétique, dans lequel une partie de la surface intérieure dudit creuset est fabriquée au moins à partir de la poudre de quartz synthétique selon la revendication 5 en tant que matière première.

7. Creuset en verre de quartz fabriqué à partir d'une poudre de quartz synthétique, dans lequel une partie de la surface intérieure dudit creuset est fabriquée au moins à partir de la poudre de quartz synthétique selon la revendication 5, et une teneur en bulles dans la couche de verre transparente, où l'épaisseur de ladite couche est de 0,5 mm depuis la surface intérieure dudit creuset, est inférieure à 0,1 %.
